(19)

Europäisches
Patentamt

European
Patent Office

Office européen
des brevets

(11)  **EP 4 298 918 A1**

(12)  **EUROPEAN PATENT APPLICATION**

(43) Date of publication:
**03.01.2024  Bulletin 2024/01**

(21) Application number: **23179414.0**

(22) Date of filing: **15.06.2023**

(51) International Patent Classification (IPC):
***A23K 50/10*** *(2016.01)*

(52) Cooperative Patent Classification (CPC):
**A23K 50/10; A23K 20/142; A23K 20/147;
A23K 20/158; A23K 20/163; A23K 20/20;
A23K 20/22; A23K 20/24; A23K 20/26; A23K 50/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022  NL 2032337**

(71) Applicant: **Nukamel NV**
**2440 Geel (BE)**

(72) Inventors:
• **GOOSSENS, Evy**
 **9185 Wachtebeke (BE)**

• **DUCATELLE, Richard, Victor, Aimé**
 **9790 Wortegem-Petegem (BE)**
• **PARDON, Bart**
 **9930 Lievegem (BE)**
• **VAN IMMERSEEL, Filip**
 **9810 Eke (BE)**
• **DERIX, Jill**
 **9820 Merelbeke (BE)**
• **CROES, Evi**
 **3545 Halen (BE)**

(74) Representative: **Nederlandsch Octrooibureau**
**P.O. Box 29720**
**2502 LS The Hague (NL)**

(54)  **USE OF A LOW-LACTOSE DAIRY BASED MILK REPLACER FOR BOVINES**

(57)  The present invention relates to a low-lactose dairy-based milk replacer for use in the treatment or prevention of insulin resistance in a bovine subject. The present invention further relates to the use of such a low-lactose dairy-based milk replacer for feeding bovine, in particular calves, such that the development of insulin resistance is prevented.

**EP 4 298 918 A1**

**Description**

TECHNICAL FIELD OF THE INVENTION

The present invention relates to a low-lactose dairy-based milk replacer for use in the treatment or prevention of insulin resistance in a bovine subject. The present invention further relates to the use of such a low-lactose dairy-based milk replacer for feeding bovine, in particular calves, such that the development of insulin resistance is prevented.

BACKGROUND OF THE INVENTION

Milk replacers have been developed as a tool to improve daily (weight) gain in calves and to save valuable milk products for human consumption, while at the same time using less costly ingredients that are less suitable for human consumption. For these milk replacers a relative high protein (24-28 wt.%) level is deemed beneficial for growth. However intensive feeding schemes making use of these milk replacers increase the risk for gut health issues, such as ruminitis and ruminal acidosis, bloat (ruminal and abomasal), dysbiosis (with enteritis and diarrhea) and, most importantly, necro-haemorrhagic enteritis.

In both the milk and veal industry, lactose is considered one of the most important macronutrients. To benefit the milk industry, cows are bred to produce more lactose to gain higher milk yields, whereas the veal industry uses milk replacers containing approximately 45 wt.% (on dry basis) of lactose to enhance rearing. However, it has been observed that many animals being fed such milk replacers suffer from various problems.

In bovine, in particular in calves, fed with conventional milk replacers abnormal increased blood glucose levels and excessively elevated insulin concentrations are often observed. It is assumed that this is due to the nature of such a diet, which leads to excessive concentrations of metabolites such as glucose in the circulation. In time, this results in insulin resistance and disrupted glucose homeostasis.

Deviation from optimal metabolic functioning results in reduced biochemical efficiency and as a consequence thereof in a decreased feed conversion. Hence, generally bovine, in particular, calves suffering therefrom are lighter and suffer from hyperinsulinemia, glucosuria and/or hyperglycaemia. This is disadvantageous from both an animal welfare perspective and economical perspective.

In order to overcome these problems use has been made of milk-replacers with a relatively low amount of total carbohydrates. However, due to the absence of a sufficient amount of carbohydrates more fat and protein is added to these milk-replacers. Alternatively, vegetable based milk replacers may be used. However this considerably increases the costs of these milk-replacers and rearing of the animals. Hence, a need remains for a milk-replacer that prevents the insulin resistance and a disrupted glucose homeostasis.

SUMMARY OF THE INVENTION

A first aspect of the present invention relates to a low lactose dairy-based milk replacer for use in the treatment or prevention of insulin resistance in bovine subjects, wherein said bovine subjects are administered a daily feeding dose of a low-lactose milk replacer that comprises at least 30 wt.% carbohydrates, but less than 20wt. % of lactose based on total dry weight of the milk replacer.

The present inventors have surprisingly found that the presence of carbohydrates in the feed of the animals was not the problem, but the presence of lactose. It was surprisingly found that if lactose present in the feed is converted into its monosaccharides (i.e. glucose and galactose) prior to feeding it to the animals they do not develop insulin resistance and do not suffer from a disrupted glucose homeostasis. This has not been recognized before and allows the possibility for dairy-based milk replacers that comprise a relatively hight amount of carbohydrates, without causing the above mentioned problems.

A second aspect of the present invention relates to the (non-therapeutical) use of a low lactose dairy-based milk replacer for feeding and preventing insulin resistance of bovine subjects, wherein said bovine subjects are administered a daily feeding dose of a low-lactose milk replacer that comprises at least 30 wt.% carbohydrates, but less than 20wt. % of lactose based on total dry weight of the milk replacer.

DEFINITIONS

The term "*lactose*" as referred to herein has its normal scientific meaning and refers to a disaccharide of glucose and galactose.

The term "*carbohydrates*" as referred to herein refers to mono- and disaccharides, such as in particular glucose, galactose and lactose.

The term "*dairy-based milk replacer*" as referred to herein has its normal scientific meaning and refers to a liquid feed given to bovine, in particular calves, such as veal calves. Further description of different types of dairy-based milk replacers is provided below.

The term "*treatment*" as referred to herein has its normal scientific meaning and refers to curative and prophylactic treatment of an illness or condition.

The term "*prevention*" as referred to herein has its normal scientific meaning and refers to any action resulting in suppression or delay of the onset of insulin resistance thanks to the administration of the low lactose diary-based milk replacer according to the present invention.

The term "*bovine*" as referred to herein has its normal meaning and refers to animals of the family of ruminants belonging to the genus Bos or any closely related genera of the family Bovidae. Preferred bovine animals are the cow and ox. Especially preferred bovine species are Bos taurus.

The term "*calf*" as used herein has its normal meaning and refers to young domestic animals, such as, for example of the genus Bos, in particular Bos taurus.

The term "*veal calf*" as used herein has its normal meaning and refers to a calf, that is bred and raised to produce veal meat, in particular a milk-fed animal less than 8 months old.

The term "*feeding dose"* as referred to herein has its normal meaning and refers to an amount of feed to an animal that is sufficient to substantially meets its daily need of nutrients.

BRIEF DESCRIPTION OF THE DRAWINGS

Figure 1: Time to reach peak serum concentration of glucose (min) after oral lactose bolus at the start and end of the experimental trial, for animals that either consumed untreated milk replacer (HL), or lactase-treated milk replacer (LF).

Figure 2: Insulin sensitivity of animals that consumed either a High Lactose (HL) diet or lactase-treated (LF) milk replacer throughout the trial (QUICKI difference 0.59; p=0.011).

DETAILED DESCRIPTION OF THE INVENTION

A first aspect of the present invention relates to a low lactose dairy-based milk replacer for use in the treatment or prevention of insulin resistance in bovine subjects, wherein said bovine subjects are administered a daily feeding dose of a low-lactose milk replacer that comprises at least 30wt.% carbohydrates, but less than 20wt.% of lactose based on total dry weight of the milk replacer.

The present inventors have surprisingly found that by reducing the amount of lactose, albeit maintaining a high amount of carbohydrates, preferably glucose and galactose, in the milk replacers of bovine, in particular calves, such as veal calves, it has become possible to avoid the development of insulin resistance in these animals.

Without wishing to be bound by any theory it is assumed that lactose is normally split by lactase that is present in the alimentary tract and the resulting mono-carbohydrates are mainly taken up in the duodenum and jejunum and only a minor part reaches the first part of the ileum and is taken up there. Although bovine alimentary tracts have a large capacity to take up mono-carbohydrates, such as glucose and galactose, it has been found that the lactase content in the alimentary tract of the calf decreases, thereby decreasing the enzyme-driven lactose split capacity. The inventors believe that for the intensive feedings schemes making use of milk replacers, the amount of lactose presented to the calves is higher than the amount of lactose that the intestinal lactose processing capacity of the calf is able to sufficiently process, resulting in a significant amount of lactose in the intestine of the calf.

The low lactose dairy-based milk replacer according to the present invention is preferably administered to calves, in particular veal calves.

The calves are depending on their age and need administered a feeding dose of preferably between 4 to 15 litres, more preferably 4 to 10 litres per day of the milk replacer. This daily feeding dose substantially meets the daily intake the calf requires. This daily feeding dose is preferably administered to the calves in several parts per day. For example the daily feeding dose of between 4 to 15 litres is administered in two or three rounds of feeding. However, it is also possible to feed the animals ad libitum, for example by means of an automatic feeding system.

The low lactose dairy-based milk replacer according to the present invention may be provided to the calves after birth, alternatively 7 days or 14 days after birth. After the start, the milk replacer according to the present invention is consecutively administered for 20 days or more, optionally for 40 days or more. Alternatively, calves may be fed said milk replacer for 5 to 10 weeks. However, veal calves may be fed even longer with said milk replacer, typically until 6 to 8 months of age, at which time they are usually slaughtered.

With respect to the composition of the low lactose dairy-based milk replacer according to the present invention it is noted that preferably at least 50 wt.% of the carbohydrates in the dairy-based milk replacer according to the present invention is galactose and/or glucose. More preferably at least 75% of the carbohydrates are galactose and/or glucose. The ratio of glucose to galactose molecules in the milk-replacer according to the present invention is preferably about 1:1. The skilled person will be able to determine the ratio of the monosaccharides by means of techniques well known in the art.

In order to avoid insulin resistance in these animals the milk-replacer according to the present invention comprises a relatively low amount of lactose. Preferably the dairy-based milk replacer according to the present invention comprises less than 20 wt.% of lactose, more preferably less than 10wt.% lactose, even more preferably about 0 wt.% lactose.

In one embodiment low lactose dairy-based milk replacers according to the present invention comprises 50 wt.% or more of dairy protein based on total protein, more preferably 70 wt.% or more, even more preferably 90 wt.% or more. In addition or alternatively, the milk replacer according to the present invention preferably comprises 30 wt.% or more of dry weight of dairy-based ingredients based on total dry weight of the milk replacer, more preferably 50 wt.% or more, even more preferably 60 wt.% or more.

The dairy-based ingredients of the low lactose dairy-based milk replacers according to the present invention are from mammalian milk, such as bovine milk. Preferably, the dairy-based ingredients are one or more selected from the list consisting of cow milk, goat milk and sheep milk. Preferably, the dairy-based milk replacer is a cow milk-based milk replacer, goat milk-based milk replacer, sheep milk-based milk replacer or a combination thereof, more preferably the dairy-based milk replacer is a cow milk-based milk replacer.

In this regard it is further noted that dairy proteins are typically more digestible than non-dairy proteins and provide a desirable amino acid profile for calf growth. Therefore, preferably, dairy products that provide dairy protein are used in the manufacturing of milk replacers. These include whey, whey protein concentrate, whey solubles, skim milk and casein. Whey products are utilized as important protein sources in dairy-based milk replacers. In one embodiment the low-lactose dairy-based milk replacer according to the present invention comprises 20 wt.% or more of whey protein based on total protein or 40 wt.% or more of whey protein based on total protein, more preferably 60 wt.% or more, even more preferably 80 wt.% or more. Casein products are also utilized as important protein sources in dairy-based milk replacers. In one embodiment the low-lactose dairy-based milk replacer according to the present invention preferably comprises 40 wt.% or more of casein based on total protein, more preferably 60 wt.% or more, even more preferably 80 wt.% or more. However, it is noted that it is also possible to prepare a diary based milk replacer without any casein.

The amounts of macro-nutrients in a milk replacer are tailored to optimize growth and well-being of the bovine, such as a calf. Preferably, the low-lactose dairy-based milk replacer according to the present invention comprises 10 - 35 wt.% protein based on total dry weight of the milk replacer, such as 14 - 30 wt.%, 10 - 30 wt.% lipids based on total dry weight of the milk replacer and 30 - 60 wt.% of digestible carbohydrates based on total dry weight of the milk replacer, more preferably comprise 15-28 wt.% protein based on total dry weight of the milk replacer, 15 - 25 wt.% lipids based on total dry weight of the milk replacer and 35-55 wt.% of digestible carbohydrates based on total dry weight of the milk replacer, most preferably comprise 20 - 25 wt.% protein based on total dry weight of the milk replacer, 20 - 25 wt.% lipids based on total dry weight of the milk replacer and 40 - 50 wt.% of digestible carbohydrates based on total dry weight of the milk replacer.

Preferably, the dairy-based milk replacer according to the present invention is based on milk, such as cow milk. As is generally known, (cow) milk comprises a lot of lactose. In order to avoid too high amounts of lactose in the milk replacer according to the present invention the milk used as a base for the milk replacer may be subjected to lactase. Depending on the concentration of lactase added, the temperature of the (processed) milk and the time of treatment a considerable part of the lactose present maybe broken down into its monosaccharides glucose and galactose. This way, the concentration lactose may be reduced considerably. Hence, the low-lactose dairy-based milk replacer of the invention comprises less than 20 wt.% of lactose based on total dry weight of the milk replacer, more preferably the low-lactose dairy-based milk replacer comprises less than 15 wt.%, even more preferably less than 5 wt.%, preferably less than 4 wt.%, less than 3 wt.%, less than 2 wt.%, less than 1 wt.%, less than 0.5 wt.%, less than 0.2 wt.%, less than 0.1 wt.%, most preferably 0 wt.% lactose.

The dairy-based milk replacer according to the present invention may be prepared from a lactase-enriched dairy-based milk replacer. Preferably the lactase-enriched dairy-based milk replacer is for use in preparing the low-lactose dairy-based milk replacer according to the present invention. However, the lactase-enriched dairy-based milk replacer may thus also be used for the prevention of insulin resistance or for preparing a low lactose dairy based milk replacer according to the present invention.

This lactase-enriched dairy-based milk replacer enables a relative high lactose level at production and at the same time provides for a low lactose level at the moment of feeding, e.g. the feeding of bovine calves. This way, the production process and the formulation of the milk replacer is minimally affected whilst at the same time developed of insulin resistance is avoided. Moreover, compared to non-dairy based milk replacers, which can be manufactured more easily with low amounts of lactose, the protein quality is higher and the taste is better. Considering that bovines are picky eaters a good taste is important.

When a lactase-enriched dairy-based milk replacer as referred to above is mixed with e.g. water the lactase will become active and split the lactose of the milk replacer. The lactase activity may prolong in the stomach of the cow, supporting the bovine's own lactase. For example, the mixture of lactase and the milk replacer are dissolved in water at $20^0$-$60^0$C, in particular 36 - 48°C for a time period sufficient for the lactase to split 70 - 100% of the lactose, preferably 80 - 100%, more preferably 90 - 100%, most preferably 95 - 100%, such as 92 - 99% and 94 - 98%. Preferably, the temperature during lactase incubation of the dissolved milk replacer is 38 - 45°C, more preferably 39 - 45°C such as 40 - 42°C or 41 $\pm$ 2°C.

A lactase-enriched dairy-based milk replacer that may be used for preparing the low lactose dairy-based milk-replacer according to the present invention may comprise 20 - 60 wt.% lactose based on total dry weight of the lactase-enriched dairy-based milk replacer, 10 - 35 wt.% of protein based on total dry weight of the lactase-enriched dairy-based milk replacer, 10 - 30 wt.% of lipids based on total dry weight of the lactase-enriched dairy-based milk replacer, 90 wt.% or more of dry matter based on total weight of the lactase-enriched dairy-based milk replacer, and lactase, preferably 100 U or more lactase per kg dry weight of the lactase-enriched dairy-based milk replacer, preferably 400 U or more, more preferably 700 U or more, even more preferably 1000 U or more.

In one embodiment the lactase-enriched dairy-based milk replacer that may be used for preparing the low lactose dairy-based milk-replacer according to the present invention, comprises 20 - 60 wt.% lactose based on total dry weight of the lactase-enriched dairy-based milk replacer, 10 - 35 wt.% of protein based on total dry weight of the lactase-enriched dairy-based milk replacer, 10 - 30 wt.% of lipids based on total dry weight of the lactase-enriched dairy-based milk replacer, 90 wt.% or more of dry matter based on total weight of the lactase-enriched dairy-based milk replacer, and lactase, preferably 1500 - 3000 U per liter dissolved lactase-enriched dairy-based milk replacer, preferably 1800 - 2600 U such as about 2000 U lactase. Typically, lactase at a dose of about 1700 - 2300 U per L of dissolved dry powder of the dairy-based milk replacer, such as about 2000 U/L, is provided. Typically, the liquid dissolved lactase-enriched dairy-based milk replacer is incubated for at least 25 minutes, such as 25 - 60 minutes, preferably 30 - 50 minutes, more preferably 35 - 45 minutes such as about 40 minutes, at 37°C - 45°C, preferably at about 42°C. Typically, 100 - 200 gram of the milk replacer is dissolved in 1 liter of water, such as 125 - 180 gram/L, or 125 - 160 gram/L.

Preferably, the lactase-enriched dairy-based milk replacer for bovines comprises 20 - 50 wt.% lactose based on total dry weight of the lactase-enriched dairy-based milk replacer, more preferably 30 - 50 wt.%, most preferably 35-45 wt.%.

In another embodiment, the lactase-enriched dairy-based milk replacer that may be used for preparing the low lactose dairy-based milk-replacer according to the present invention preferably comprises 200 U or more lactase per kg lactose of the lactase-enriched dairy-based milk replacer, more preferably 800 U or more, even more preferably 1500 U or more, most preferably 2000 U or more.

In this regard it is noted that lactase is an enzyme known in the art and commercially provided by several suppliers. The lactase activity is expressed in U and can be determined according to Jasewicz et al. (Quantitative determination of lactase. J. Dairy Sci. 44:393-400, 1961). A unit U of lactase is defined as the amount of enzyme which will liberate 1 $\mu$M of glucose from lactose in 15 min. at 37°C. To reach a specific lactose conversion, a specific amount of lactase (or lactase encompassing a specific amount of lactase activity) should be provided for a specific time at a specific temperature. Suppliers of lactase provide this information, and next to this the amount, temperature and time to reach a desired lactose conversion can easily be determined by routine experimentation. The lactase of the lactase-enriched dairy-based milk replacer is active, so not denatured lactase. Active with regards to lactase has the meaning that the lactase when brought into contact with dissolved lactose under typical lactose-split reaction conditions will hydrolyse lactose.

The skilled person will appreciate that other than with the above mentioned the lactase-enriched dairy-based milk replacer a low lactose dairy-based milk replacer according to the present invention may be obtained.

Preferably, the low-lactose dairy-based milk replacer is obtained by treating a milk replacer with a higher lactose content than the low-lactose dairy-based milk replacer with means to lower the lactose content of the milk replacer, such as treating such a milk replacer with lactase.

A second aspect of the present invention relates to the (non-therapeutical) use of a low lactose dairy-based milk replacer for feeding and preventing insulin resistance of bovine subjects, wherein said bovine subjects are administered a daily feeding dose of a low-lactose milk replacer that comprises at least 30 wt.% carbohydrates, but less than 20wt. % of lactose based on total dry weight of the milk replacer.

The bovine subjects referred to above are preferably calves, in particular veal calves. These calves are preferably calves are administered a feeding dose of between 4 to 15 litres, preferably 4 to 10 litres per day of the milk replacer. Said feeding dose may be administered by means of separate portions during the day, as referred to above. The calves may start with the milk replacer directly after birth, alternatively 7 days or 14 days after birth. Furthermore, after starting the milk replacer is consecutively administered for 20 days or more, optionally for 40 days or more, alternatively it is administered to calves consecutively for 5 to 10 weeks, alternatively it is administered to veal calves for 6 to 8 months. The composition of the low lactose dairy-based milk replacer is as described as above.

The present invention will be illustrated further by the following non-limiting example.

EXAMPLE

**In-vivo experiment in bull calves**

*Diet: a high lactose milk replacer versus a lactose-free equivalent*

To determine the effect of lactose on insulin sensitivity, calves were fed either a 'high lactose' (HL) or 'lactose-free' (LF) milk replacer. HL milk replacer, containing 45% lactose on dry matter, was obtained as a dry powder (Table 1; Nukamel, Weert, The Netherlands) and prepared as instructed by the manufacturer. In order to obtain LF milk replacer without affecting any other components, the HL milk replacer was lactase treated (Disolut, Donkerboek, The Netherlands). To determine the minimal incubation time and lactase concentration required to break down all lactose in the high lactose milk replacer, the milk was treated with different lactase concentrations (ranging from 0 to 2200 U/L) at different incubation times (ranging from 0 to 90 minutes) at 42 °C. The residual lactose concentration present in the milk after lactase treatment was determined using a lactose assay kit (Sigma-Aldrich). A lactase concentration of 110 U/L was able to degrade all lactose within 15 minutes of incubation. To avoid the presence of any residual lactose in the LF milk during the in vivo trial, milk was treated with a two-fold concentration of lactase (220 U/L) for at least 20 minutes at 42°C.

**Table 1. Nutritional composition of milk replacer**

| Analytical components | % |
|---|---|
| DM, % | 96.9 |
| Crude protein, % of DM | 23.5 |
| Crude fat, % of DM | 18.0 |
| Crude ash, % of DM | 7.0 |
| Crude fiber, % of DM | 0.0 |
| Calcium, % of DM | 0.9 |
| Lactose, % of DM | 45.0 |
| Phosphorus, % of DM | 0.7 |
| Sodium, % of DM | 0.5 |
| Lysin, % of DM | 2.5 |
| Methionine, % of DM | 0.6 |
| Threonine, % of DM | 1.2 |
| Milk replacer was prepared and fed at a concentration of 15% (w/v) in tap water. | |

*Feeding regimen and housing conditions*

The animal experiment was approved by the Ethical Committee of the Faculties of Veterinary Medicine and Bioscience Engineering of Ghent University (EC 2020-001). Eighteen healthy Holstein-Friesian bull calves (age 16.6 $\pm$ 3.3 days; body weight 52.7 $\pm$ 1.6 kg) were transported from a single dairy farm to the Faculty of Veterinary Medicine, Ghent University. Upon arrival they were randomly assigned to two test groups (HL, LF) by colored ear tags. Animals from both groups were equally divided over three stables of 21.4, 21.4 and 20.4 m$^2$. During the first three weeks after arrival, animals were kept individually, thereafter grouped per three. The concrete floors were bedded with rubber mats, which were cleaned on a bidaily basis.

Animals were fed three times a day at 09:00, 15:00 and 20:00 with either the HL or LF milk replacer, following a feeding regime in which the milk replacer volume increased during the first month. For the first five days, amoxicillin (70% Kela, Belgium) was added twice a day to the milk (500 mg per animal) to emulate the preventative treatment that is commonly used in veal rearing.

The feeding amount started at four liters per day in the first week, which then every week increased with two liters, to reach the maximum amount often liters per day, from the fourth week until the end of the experiment. The daily amount was equally divided over the three feeding moments. Milk was prepared using a milk taxi (Holm & Laue, Westerrönfeld, Germany) by dissolving the milk powder in one third of the final amount of water (55 °C), followed by ten minutes of continuous mixing. Thereafter, the remaining two-thirds of water (cold) were added, again followed by ten minutes of continuous mixing. Prepared milk replacer was then provided to animals of the HL group, and the remaining amount of milk in the milk taxi was lactase treated in the meantime, to obtain the LF milk replacer (220 U/L lactase, 20 minutes, 40-42°C, with constant mixing), after which the calves in the LF group were fed. All animals were individually fed to ensure that they all consumed the same amount of milk. The milk was offered at 40°C. Until the age of four weeks, animals consumed only the milk replacer. Thereafter they also had ad libitum access to clean drinking water.

Serum samples and rectally collected fecal samples were taken every two weeks, up until 12 weeks after arrival, and frozen (-20° C) until further processing.

*Lactose tolerance test*

A lactose tolerance test (LTT) was performed at the start and the end of the trial, at an age of 2 and 12 weeks, respectively. The animals were fasted overnight, to avoid effects on baseline glucose and insulin values. After shaving and disinfecting the skin, a 14G catheter was inserted into the vena jugularis and was connected to a polyvinyl chloride elongation tube (60 cm, Dialex-Biomedica, Bilzen, Belgium), as described by Bossaert et al. [1]. The LTT started at least one hour after applying the catheter in the last animal. Via the elongation tube, a 20 mL syringe was used to obtain blood samples, which were collected in (i) serum blood tubes and (ii), fluorinated blood tubes for the determination of insulin and glucose concentration, respectively. After taking the two blood samples, the IV line was thoroughly flushed with sterile saline (Braun, Melsungen, Germany).

First, a baseline sample was obtained. Thereafter, a 20% (w/v) lactose solution (Nukamel, Weert, The Netherlands) was administered orally at 1 gram per estimated kilogram of average body weight [2], immediately followed by a blood sampling (time: 0 min). Thereafter, blood samples were drawn at 5, 15, 30, 45, 60, 90, 120, and 180 minutes after administering the lactose solution. Samples were processed within two hours after collection. Se-rum and plasma were obtained by centrifugation (2000g, 30 min), transferred to new tubes, and stored at -20 °C until further analysing. All samples were analysed at the Laboratory for Clinical Biology of UZ Ghent (Belgium). To determine the insulin concentration, Cobas Insulin (Roche Diagnostics, Indianapolis, IN, USA) was used in an electro-chemiluminescence immunoassay method [1], with a detection limit of 0.40 μU/mL. For glucose concentration, hexokinase was used to catalyse the reaction to form glu-cose-6-phosphate [3]. Subsequently, increase in NADH was measured by colorimetric analysis (Cobas GLUC2 kit, Roche Diagnostics). The LTT was performed at an age of 2 weeks and 12 weeks.

Glucose levels were used to calculate the average time needed to reach peak concentration. Baseline concentrations of both determinants were used to verify differences in hepatic insulin sensitivity, which is expressed as values of the quantitative insulin sensitivity check index (QUICKI) [4]. QUICKI-values are calculated as follows:

$$QUICKI = 1/\log(I0) + \log(G0)$$

I0 = Baseline insulin concentration

G0 = Baseline glucose concentration

*Results: effect of lactose consumption on lactose digestion and insulin sensitivity*

*a) Serum glucose concentrations after oral administration of lactose in HL and LF test groups*

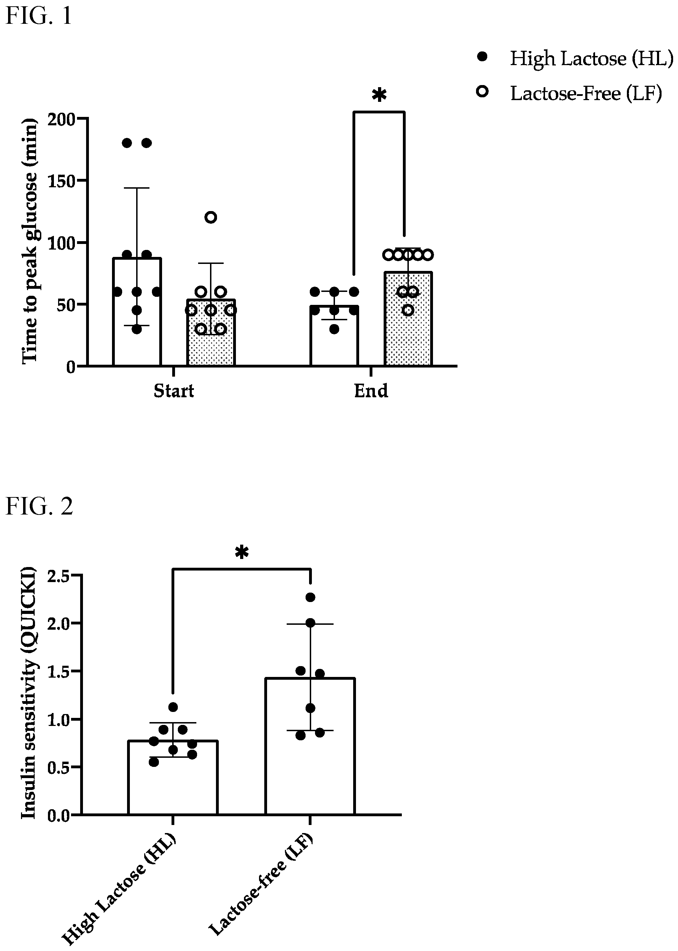

The time needed to reach peak serum glucose concentration after oral administration of a lactose bolus, did not differ between the two groups at start of the trial (See Figure 1). By the end of the trial, however, there was a significant difference between two groups (p<0.01). HL animals reached peak concentration after 49.29 ± 11.34 minutes, whereas it took 75.00 ± 19.36 minutes for animals of the LF group (p=0.0408) (Figure 1).

*b) Insulin sensitivity in HL and LF test groups*

Basal glucose and insulin levels were determined to calculate insulin sensitivity (Table 2). While basal glucose concentrations did not differ between groups (p=0.117), there was a significant difference (p=0.022) in insulin concentrations, with 4.65 ± 2.98 μU/mL for the HL group, and 1.81 ± 1.01 μU/mL for the LF group. Consequently, the QUICKI-values were lower for the HL group (Figure 2/Table 2), which means that these animals have lower insulin sensitivity.

Table 2. Baseline values for glucose and insulin in fasted calves that consumed untreated or lactase-treated milk replacer throughout the whole trial

|  | High Lactose | | Lactose-free | | Comparing test groups | |
|---|---|---|---|---|---|---|
|  | Mean | SD | Mean | SD | Mean diff. | p-values |
| Glucose baseline | 5.16 | 0.69 | 4.41 | 1.06 | 0.75 | ns |
| Insulin baseline | 4.65 | 2.98 | 1.81 | 1.01 | 2.85 | 0.022 |
| Glucose baseline (log) | 0.71 | 0.06 | 0.63 | 0.11 | 0.08 | ns |
| Insulin baseline (log) | 0.59 | 0.27 | 0.20 | 0.25 | 0.40 | 0.007 |
| QUICKI | 0.78 | 0.18 | 1.37 | 0.54 | 0.59 | 0.011 |

*Conclusions*

It was shown that when lactose stays a substantial part of the diet (HF group), calves have a better lactose tolerance, compared to calves that were kept on the LF diet. This supports findings reported by Huber et al. [6], who found a positive link between lactose concentration in the diet, and intestinal lactase activity. Theoretically, the latter would not be an issue, if dietary lactose would remain high. However, in veal production systems, feeding schedules usually entail an increase both in volume and in concentration of the milk replacer. This may be an issue, depending on whether or not the effect on lactose tolerance can adapt to this, which is currently unknown. If intestinal lactase activity is insufficient, lactose passes through towards the large intestines, where it provides the commensal bacterial community as a nutrient source [7]. Hindgut fermentation of this fast-degradable carbohydrate typically causes bloat and increased acidity due to lactate production [8] which leads to colic, and diarrhea. In lactose intolerant calves specifically, diarrhea is the most important symptom, while bloat is less common [2].

Together with the evaluation of lactose tolerance, insulin sensitivity was assessed as well. The average QUICKI values (Table 2) for animals of the HL group (0.78 $\pm$ 0.18) were higher than Bossaert et al. [1] reported for Holstein-Friesian calves (0.52), but are similar to their observations for Belgian Blue calves (0.76). The LF group of the present study, however, scored significantly higher for insulin sensitivity (1.37 $\pm$ 0.54, p=0.011). The (relatively) large difference was not expected, as Pantophlet et al. [9] reported that insulin sensitivity is not affected by weaning management. Yet, weaning management entails more than just lactose and therefore there may be other nutritional factors, such as roughage, concentrate or the lack of certain milk proteins, that have played a role in the results of the latter study. An increased insulin sensitivity is desirable, as it reduces the risk on several metabolic issues, such as hyperinsulinemia, glucosuria [10], and hyperglycemia [10, 11], as it can lead to insulin resistance [5].

REFERENCES

1. Bossaert, P.; Leroy, J.L.M.R.; de Campeneere, S.; de Vliegher, S.; Opsomer, G. Differences in the Glucose-Induced Insulin Response and the Peripheral Insulin Responsiveness between Neonatal Calves of the Belgian Blue, Holstein-Friesian, and East Flemish Breeds. J. Dairy Sci. 2009, 92, 4404-4411, doi:10.3168/jds.2009-2218.

2. Olchowy, T.W.J.; Linnabary, R.D.; Andrews, F.M.; Longshore, R.C. Lactose Intolerance in a Calf. J. Vet. Intern. Med. 1993, 7, 12-15, doi:10.1111/j.1939-1676.1993.tb03162.x.

3. Neeley, W.E. Simple Automated Determination of Serum or Plasma Glucose by a Hexokinase-Glucose-6 -Phosphate Dehydrogenase Method. Clin. Chem. 1972, doi:10.1093/clinchem/18.6.509.

4. Katz, A.; Nambi, S.S.; Mather, K.; Baron, A.D.; Follmann, D.A.; Sullivan, G.; Quon, M.J. Quantitative Insulin Sensitivity Check Index: A Simple, Accurate Method for Assessing Insulin Sensitivity in Humans. J. Clin. Endocrinol. Metab. 2000, 85, doi:10.1210/jcem.85.7.6661.

5. Pantophlet, A.J.; Gerrits, W.J.J.; Vonk, R.J.; van den Borne, J.J.G.C. Substantial Replacement of Lactose with Fat in a High-Lactose Milk Replacer Diet Increases Liver Fat Accumulation but Does Not Affect Insulin Sensitivity in Veal Calves. J. Dairy Sci. 2016, 99, 10022-10032, doi:10.3168/jds.2016-11524.

6. Huber, J.T.; Rifkin, R.J.; Keith, J.M. Effect of Level of Lactose upon Lactase Concentrations in the Small Intestines of Young Calves. J. Dairy Sci. 1964, 47, 789-792, doi:10.3168/jds.S0022-0302(64)88765-8.

7. Castro, J.J.; Gomez, A.; White, B.; Loften, J.R.; Drackley, J.K. Changes in the Intestinal Bacterial Community, Short-Chain Fatty Acid Profile, and Intestinal Development of Preweaned Holstein Calves. 2. Effects of Gastrointestinal Site and Age. J. Dairy Sci. 2016, doi:10.3168/jds.2016-11007.

8. Pedersen, E.R.; Jensen, B.H.; Jensen, H.J.; Keldsbo, I.L.; Moller, E.H.; Rasmussen, S.N. Lactose Malabsorption and Tolerance of Lactose-Hydrolyzed Milk. http://dx.doi.org/10.3109/00365528209181106 1982, 17, 861-864, doi:10.3109/00365528209181106.

9. Pantophlet, A.J.; Gilbert, M.S.; van den Borne, J.J.G.C.; Gerrits, W.J.J.; Priebe, M.G.; Vonk, R.J. Insulin Sensitivity in Calves Decreases Substantially during the First 3 Months of Life and Is Unaffected by Weaning or Fructo-Oligosaccharide Supplementation. J. Dairy Sci. 2016, 99, 7602-7611, doi:10.3168/jds.2016-11084.

10. Hostettler-Allen, R.L.; Tappy, L.; Blum, J.W. Insulin Resistance, Hyperglycemia, and Glucosuria in Intensively Milk-Fed Calves. J. Anim. Sci. 1994, 72, doi:10.2527/1994.721160x.

11. Hugi, D.; Gut, S.H.; Blum, J.W. Blood Metabolites and Hormones-Especially Glucose and Insulin-in Veal Calves: Effects of Age and Nutrition. J. Vet. Med. Ser. A Physiol. Pathol. Clin. Med. 1997, 44, doi:10.1111/j.1439-0442.1997.tb01126.x.

**Claims**

1. Low lactose dairy-based milk replacer for use in the treatment or prevention of insulin resistance in bovine subjects, wherein said bovine subjects are administered a daily feeding dose of the low-lactose milk replacer that comprises at least 30wt.% carbohydrates, but less than 20wt. % of lactose based on total dry weight of the milk replacer.

2. Low lactose dairy-based milk replacer for use according to claim 1, wherein at least 50wt.%, preferably at least 75wt/% of the carbohydrates is galactose and/or glucose, preferably the ratio glucose to galactose is about 1:1.

3. Low lactose dairy-based milk replacer for use according to claim 1 or 2, wherein the bovine subjects are calves, in particular veal calves.

4. Low lactose dairy-based milk replacer for use according to claim 1, wherein the bovine subjects are calves and wherein said calves are administered a feeding dose of between 4 to 15 litres, preferably 4 to 10 litres per day of the milk replacer.

5. Low lactose dairy-based milk replacer for use according to claim 3, wherein the calves are administered the milk replacer directly after birth, alternatively 7 days or 14 days after birth.

6. Low lactose diary-based milk replacer for use according to any of the previous claims, wherein the milk replacer is consecutively administered for 20 days or more, optionally for 40 days or more, alternatively it is administered to calves consecutively for 5 to 10 weeks, alternatively it is administered to veal calves for 6 to 8 months.

7. Low lactose dairy-based milk replacer for use according to any of the previous claims, wherein the milk replacer comprises less than 20wt.% of lactose, preferably less than 10wt.% lactose, more preferably about 0wt.% lactose.

8. Use of a low lactose dairy-based milk replacer for feeding and preventing insulin resistance of bovine subjects, wherein said bovine subjects are administered a daily feeding dose of a low-lactose milk replacer that comprises at least 30wt.% carbohydrates, but less than 20wt.% of lactose based on total dry weight of the milk replacer.

9. Use according to claim 7, wherein the bovine subjects are calves, in particular veal calves.

10. Use according to claim 7 or 8, wherein the bovine subjects are calves and wherein said calves are administered a feeding dose of between 4 to 15 litres, preferably 4 to 10 litres per day of the milk replacer.

11. Use according to claim 9, wherein the calves are administered the milk replacer directly after birth, alternatively 7 days or 14 days after birth.

12. Use according to any of the claims 8-10, wherein the milk replacer is consecutively administered for 20 days or more, optionally for 40 days or more, alternatively it is administered to calves consecutively for 5 to 10 weeks, alternatively it is administered to veal calves for 6 to 8 months.

13. Use according to any of the claims 7-11, wherein the milk replacer comprises less than 20wt.% of lactose, preferably less than 10wt.% lactose, more preferably about 0wt.% lactose.

FIG. 1

FIG. 2

Europäisches
Patentamt
European
Patent Office
Office européen
des brevets

## EUROPEAN SEARCH REPORT

Application Number

EP 23 17 9414

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILMS J N ET AL: "Determining the nutritional boundaries for replacing lactose with glucose in milk replacers for calves fed twice daily", JOURNAL OF DAIRY SCIENCE, AMERICAN DAIRY SCIENCE ASSOCIATION, US, vol. 103, no. 8, 26 June 2020 (2020-06-26), pages 7018-7027, XP086219149, ISSN: 0022-0302, DOI: 10.3168/JDS.2019-18034 [retrieved on 2020-06-26] * Introduction * * Conclusions * * Results and Discussion * * abstract * ----- | 1-13 | INV. A23K50/10 |
| X | PANTOPHLET A J ET AL: "Lactose in milk replacer can partly be replaced by glucose, fructose, or glycerol without affecting insulin sensitivity in veal calves", JOURNAL OF DAIRY SCIENCE, vol. 99, no. 4, 21 January 2016 (2016-01-21), pages 3072-3080, XP029488047, ISSN: 0022-0302, DOI: 10.3168/JDS.2015-10277 * Conclusions * * abstract * * Materials and Methods; table 1 * * Introduction * ----- | 1-13 | TECHNICAL FIELDS SEARCHED (IPC) A23K C11C |

The present search report has been drawn up for all claims

| Place of search | Date of completion of the search | Examiner |
|---|---|---|
| Munich | 25 July 2023 | Hartlieb, Ariane |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JASEWICZ et al.** Quantitative determination of lactase. *J. Dairy Sci.,* 1961, vol. 44, 393-400
- **BOSSAERT, P. ; LEROY, J.L.M.R. ; DE CAMPENEERE, S. ; DE VLIEGHER, S. ; OPSOMER, G.** Differences in the Glucose-Induced Insulin Response and the Peripheral Insulin Responsiveness between Neonatal Calves of the Belgian Blue, Holstein-Friesian, and East Flemish Breeds. *J. Dairy Sci.,* 2009, vol. 92, 4404-4411
- **OLCHOWY, T.W.J. ; LINNABARY, R.D. ; ANDREWS, F.M. ; LONGSHORE, R.C.** Lactose Intolerance in a Calf. *J. Vet. Intern. Med.,* 1993, vol. 7, 12-15
- **NEELEY, W.E.** Simple Automated Determination of Serum or Plasma Glucose by a Hexokinase-Glucose-6 -Phosphate Dehydrogenase Method. *Clin. Chem.,* 1972
- **KATZ, A. ; NAMBI, S.S. ; MATHER, K. ; BARON, A.D. ; FOLLMANN, D.A. ; SULLIVAN, G. ; QUON, M.J.** Quantitative Insulin Sensitivity Check Index: A Simple, Accurate Method for Assessing Insulin Sensitivity in Humans. *J. Clin. Endocrinol. Metab.,* 2000, vol. 85
- **PANTOPHLET, A.J. ; GERRITS, W.J.J. ; VONK, R.J. ; VAN DEN BORNE, J.J.G.C.** Substantial Replacement of Lactose with Fat in a High-Lactose Milk Replacer Diet Increases Liver Fat Accumulation but Does Not Affect Insulin Sensitivity in Veal Calves. *J. Dairy Sci.,* 2016, vol. 99, 10022-10032

- **HUBER, J.T. ; RIFKIN, R.J. ; KEITH, J.M.** Effect of Level of Lactose upon Lactase Concentrations in the Small Intestines of Young Calves. *J. Dairy Sci.,* 1964, vol. 47, 789-792
- **CASTRO, J.J. ; GOMEZ, A. ; WHITE, B. ; LOFTEN, J.R. ; DRACKLEY, J.K.** Changes in the Intestinal Bacterial Community, Short-Chain Fatty Acid Profile, and Intestinal Development of Preweaned Holstein Calves. 2. Effects of Gastrointestinal Site and Age. *J. Dairy Sci.,* 2016
- **PEDERSEN, E.R. ; JENSEN, B.H. ; JENSEN, H.J. ; KELDSBO, I.L. ; MOLLER, E.H. ; RASMUSSEN, S.N.** *Lactose Malabsorption and Tolerance of Lactose-Hydrolyzed Milk,* 1982, vol. 17, 861-864, http://dx.doi.org/10.3109/00365528209181106
- **PANTOPHLET, A.J. ; GILBERT, M.S. ; VAN DEN BORNE, J.J.G.C. ; GERRITS, W.J.J. ; PRIEBE, M.G. ; VONK, R.J.** Insulin Sensitivity in Calves Decreases Substantially during the First 3 Months of Life and Is Unaffected by Weaning or Fructo-Oligosaccharide Supplementation. *J. Dairy Sci.,* 2016, vol. 99, 7602-7611
- **HOSTETTLER-ALLEN, R.L. ; TAPPY, L. ; BLUM, J.W.** Insulin Resistance, Hyperglycemia, and Glucosuria in Intensively Milk-Fed Calves. *J. Anim. Sci.,* 1994, vol. 72
- **HUGI, D. ; GUT, S.H. ; BLUM, J.W.** Blood Metabolites and Hormones-Especially Glucose and Insulin-in Veal Calves: Effects of Age and Nutrition. *J. Vet. Med. Ser. A Physiol. Pathol. Clin. Med.,* 1997, vol. 44